Europäisches Patentamt

European Patent Office

Office européen des brevets

(11) Publication number: **0 136 173**
**A2**

## EUROPEAN PATENT APPLICATION

(21) Application number: **84306538.4**

(51) Int. Cl.⁴: **H 01 M 10/24**

(22) Date of filing: **26.09.84**

(30) Priority: **29.09.83 US 537207**

(43) Date of publication of application: **03.04.85**
**Bulletin 85/14**

(84) Designated Contracting States: **DE FR GB**

(71) Applicant: **FORD MOTOR COMPANY LIMITED, Eagle Way, Brentwood Essex CM13 3BW (GB)**
(84) Designated Contracting States: **GB**

(71) Applicant: **FORD-WERKE AKTIENGESELLSCHAFT, Ottoplatz 2 Postfach 21 03 69, D-5000 Köln 21 (DE)**
(84) Designated Contracting States: **DE**

(71) Applicant: **FORD FRANCE SOCIETE ANONYME, 344 Avenue Napoléon Bonaparte B.P. 307, F-92506 Ruell Malmaison Cedex (FR)**
(84) Designated Contracting States: **FR**

(72) Inventor: **Wroblowa, Halina Stefania, 5192 Richard Run West, West Bloomfield Michigan 48033 (US)**
Inventor: **Dzieciuch, Matthew Andrew, 1411 Plainfield, Dearborn Heights Michigan 48127 (US)**

(74) Representative: **Messulam, Alec Moses et al, A. Messulam & Co. 24 Broadway, Leigh on Sea Essex SS9 1BN (GB)**

(54) **Rechargeable manganese dioxide/zinc cell.**

(57) A rechargeable cell is disclosed in which a positive electrode is formed from a manganese oxide electrode material which contains a heavy metal selected from the group comprising lead, bismuth, and mixtures of lead and bismuth. A negative electrode is formed of zinc. A separator is placed between the positive electrode and the negative electrode. The separator is formed from a material which the negative zinc electrode to the vicinity of the positive electrode. An alkaline electrolyte is in contact with both the positive electrode and the negative electrode.

0136173

-1-

## RECHARGEABLE MANGANESE DIOXIDE/ZINC CELL

### TECHNICAL FIELD

This application is directed to a rechargeable cell and, in particular, to a rechargeable manganese dioxide/zinc cell.

### BACKGROUND ART AND PRIOR ART STATEMENT

No search was conducted on the subject matter of this specification in the U.S. Patent and Trademark Office or in any other search facility. We are unaware of any prior art more relevant to the subject matter of this specification than that which will be set forth below.

Ford Motor Company, the assignee of this application, is also assignee of two patent applications which deal with modified electrode materials, to wit: "Rechargeable Manganese Dioxide Electrode Material-I", filed August 8, 1983, given Serial No. 521,473; and "Rechargeable Manganese Oxide Electrode Materials", filed August 8, 1983, given Serial No. 521,474. These two applications are hereby incorporated by reference.

Briefly, the first application is directed to an improved manganese dioxide electrode material, the material being one which may be cycled between discharged and charged states at higher utilization of reactant and for substantially greater number of cycles than previously known manganese dioxide electrode materials. The improved manganese dioxide electrode material is characterized in that a heavy metal selected from the group consisting of bismuth, lead, and mixtures of bismuth and lead is included in the electrode material by means of a chemical reaction.

The second application mentioned above is directed to improved manganese oxide electrode materials. The manganese oxide electrode materials may be cycled between discharged and charged states at higher utilization of reactant and for a substantially greater number of cycles than previously known manganese dioxide electrode materials. The manganese oxide electrode materials are characterized in that a heavy metal selected from the group consisting of bismuth, lead, and mixtures of bismuth and lead is included in the electrode material without initial reaction of the electrode components.

The invention set forth in this specification is a rechargeable cell consisting of a positive, modified manganese dioxide or manganese oxide electrode, such as disclosed in the two above-mentioned patent applications, and a negative zinc electrode. As has been discussed more fully in the aforementioned applications, a discharged, unmodified manganese dioxide electrode can only be recharged a relatively small number of cycles of shallow depth of discharge, whereas a modified manganese dioxide or manganese oxide electrode, as set forth in the aforementioned applications, can be recharged in the absence of zincate ions, some 200-300 times, at much higher depth of discharge. However, in the presence of zincate ions, in concentrations corresponding to those present in rechargeable alkaline zinc containing cells, the modified materials, as taught in the aforementioned applications, lose their ability to be recharged from the deeply discharged state within some 20 cycles or less.

We have found that suppression of the zincate ion concentration to below 0.1 molar in the manganese oxide materials by use of a suitable separator enables the construction of a rechargeable alkaline cell containing modified manganese dioxide or manganese oxide materials as the positive electrode and zinc as the negative electrode.

-3-

## DISCLOSURE OF INVENTION

This invention is directed to a rechargeable cell and, more particularly, to a rechargeable cell which is characterized in the following manner. A positive electrode is formed from a manganese oxide electrode material which contains a heavy metal selected from the group comprising lead, bismuth, and mixtures of lead and bismuth. A negative electrode is formed of zinc. A separator is placed between the positive electrode and the negative electrode. The separator is formed from a material which suppresses migration of zincate ions from the vicinity of the negative zinc electrode to the vicinity of the positive electrode. An alkaline electrolyte is in contact with both the positive electrode and the negative electrode. If desired, the alkaline electrolyte can consist of an organic liquid (such as an alcohol) and an alkaline hydroxide.

In accordance with detailed teachings of some of the preferred embodiments of this invention, the separator can be formed from polyethylene, silica powder, and mineral oil formed into a relatively thin sheet of material.

In accordance with more detailed teachings of some of the preferred embodiments of this invention, the organic liquid of the electrolyte is methanol and the alkaline hydroxide is potassium hydroxide. In general, these two materials may be mixed in an equal volume proportion in order to form the alkaline electrolyte.

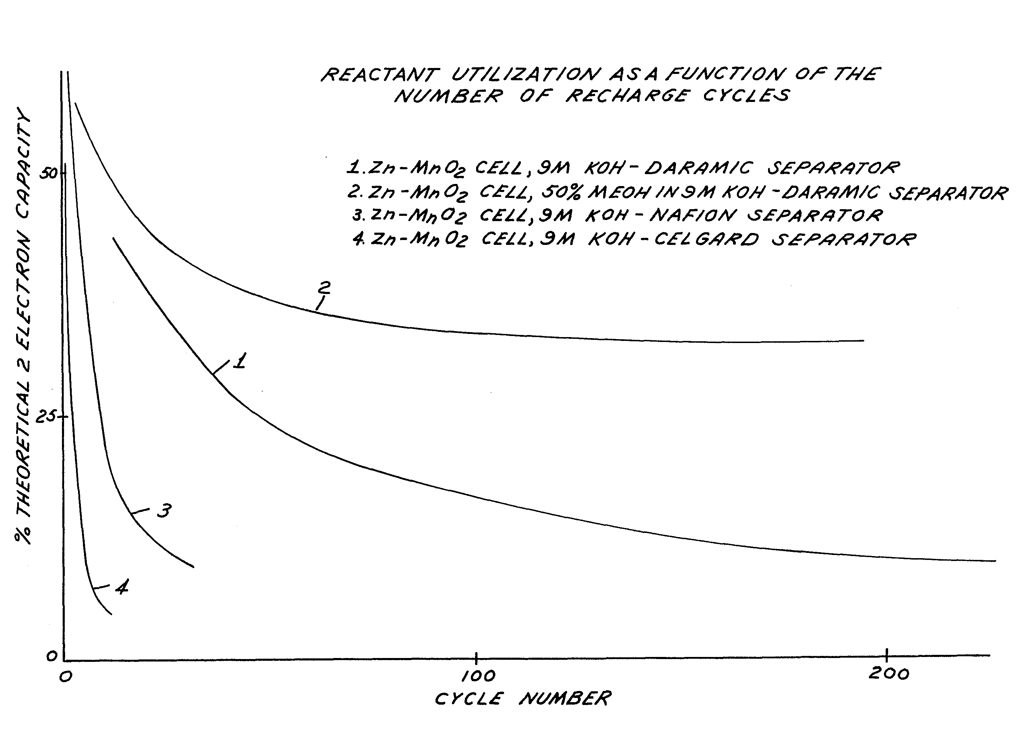

## BRIEF DESCRIPTION OF THE DRAWING

The novel features that are considered characteristic of the invention are set forth with particularity in the appended claims. The invention itself, however, both as to its organization and its method of operation, together with additional objects and advantages thereof, will best be understood from the

-4-

following description and specific embodiments when read in connection with the accompanying drawing which is a graph of the Reactant Utilization as a Function of the Number of Recharge Cycles for various test materials set forth in the examples.

## BEST MODE AND INDUSTRIAL APPLICABILITY

The following description is what we consider to be a preferred embodiment of our rechargeable cell having a negative zinc electrode. The following description also sets forth what we contemplate to be the best mode of carrying out the manufacture of our improved rechargeable cell. This description of the preferred embodiment is not intended in any manner to be a limitation upon the broader principles of this rechargeable cell having a negative zinc electrode, and while preferred materials are used to form parts of this rechargeable cell in accordance with the requirements of the laws, it does not mean that other materials cannot be used to make this rechargeable cell.

## Examples

1. ## Modified Zinc/Manganese Dioxide Cell with Separator Which Suppresses Migration of Zincate Ions

0.149 grams of the chemically prepared $BiMn_xO_y \cdot 2H_2O$ was mixed with 1.352 grams of graphite (Union Carbide SP-1), 0.182 grams of acetylene black (Shawinigan Chemical Company), and mixed for 5-10 minutes in a spex-mixer. This mixture was then mixed for an additional five minutes in the spex-mixer with the addition of 0.2 grams of 9M KOH containing 4% by weight of an organic gelling agent; in this case, Biozan.

Electrodes were prepared by placing the above paste mixture onto a nickel screen and pressing at 10-20 tons per square inch in a die. The electrodes were then wrapped in three layers of microporous polypropylene

-5-

(Celgard 3401) and one layer of a separator material which suppresses migration of zincate ions therethrough. In particular, the separator material was formed from polyethylene, silica powder, and mineral oil. The particular separator material used is Daramic, which is a commercial product of W.R. Grace.

A zinc counterelectrode was formed and wrapped in Pellon, which is nonwoven polypropylene. A cell was assembled by placing the modified manganese dioxide electrode between two zinc electrodes. The assembled cell was sealed in a polyethylene bag and electrolyte introduced and allowed to soak overnight. The electrolyte was 9M KOH. Results of cycling this cell at a constant current of 6.5 mA/in.$^2$ are shown in the figure as Curve 1. This curve shows that the cell had a charge acceptance capacity approaching about 15% of the theoretical two electron capacity even beyond 200 cycles.

2. Modified Zinc/Manganese Dioxide Cell with Separator Which Suppresses Migration of Zincate Ions With Electrolyte Consisting of Equal Volume Mixture of KOH and Methanol

0.149 grams of the chemically prepared compound $BiMn_xO_y \cdot 2H_2O$ was mixed with 1.352 grams of graphite (SP-1) and 0.182 grams of acetylene black for 5-10 minutes in a spex-mixer. This mixture was then mixed for an additional five minutes in the spex-mixer with 0.2 grams 9M KOH containing 4% by weight of the organic gelling agent Biozan.

An electrode was then prepared by placing the paste mixture onto a nickel screen in a die and pressing at 10-20 tons per square inch. The electrode was removed from the die, wrapped in three layers of microporous polypropylene (Celgard 3401) and one layer of microporous polyethylene Daramic material as discussed in Example 1.

-6-

Zinc counterelectrodes were prepared from electrodeposited zinc. The zinc electrodes were wrapped in Pellon. An assembled cell was formed by placing two zinc electrodes on each side of the manganese dioxide electrode. The assembled cell was sealed in a polyethylene bag and electrolyte introduced and allowed to soak overnight. In this case, the electrolyte was an equal volume mixture of 9M KOH and methanol. Results of cycling at a constant current of 6.5 mA/in.$^2$ are shown in the figure as Curve 2. It should be noted that in this particular case the curve shows that the cell had a charge acceptance capacity of better than 35% of the theoretical two electron capacity at approximately 200 cycles. The combination of the Daramic separator, which is one which suppresses migration of zincate ions from the vicinity of the negative zinc electrode to the vicinity of the positive electrode, along with the organic containing electrolyte, produces an even superior cell than when the special separator material is used by itself.

3. Modified Zinc/Manganese Dioxide Cell with Separator
   Which Does Not Suppress Migration of Zincate Ions

The procedure of Example 1 was repeated in detail for constructing cells with the single exception that the electrode was wrapped in one layer of cellophane (PuDO-193-Du PONT) and one layer of Nafion 427 (Du PONT), which is an ion exchange membrane. Testing of this particular cell in the manner set forth in Example 1 resulted in data shown in Curve 3. This shows that the cell in which zincate ions were permitted to migrate from the vicinity of the negative zinc electrode to the vicinity of the positive electrode rapidly had a severe reduction in the reactant utilization after relatively small number of cycles of operation.

4. **Modified Zinc/Manganese Dioxide Cell with Separator Which Does Not Supress Migration of Zincate Ions**

The procedure of Example 3 was repeated, except that the electrode was wrapped in two layers of a composite laminate of cellophane and chemically grafted polyolifinic copolymer and one layer of Pellon. Again, this separator material is not one which supresses the migration of zincate ions from the vicinity of the negative zinc electrode to the vicinity of the positive electrode. The results of testing of this cell is set forth in the figure as Curve 4. Once again, since the separator did not suppress the migration of materials, the reactant utilization dropped drastically after a very few cycles.

- 8 -    0136173

## CLAIMS

1.    A rechargeable cell, which is characterised by; a positive electrode formed from a manganese oxide electrode material which contains a heavy metal selected from the group comprising lead, bismuth, and mixtures of bismuth and lead; a negative electrode of zinc; a separator between said positive electrode and said negative electrode, said separator being formed from a material which suppresses migration of zincate ions from the vicinity of the negative zinc electrode to the vicinity of the positive electrode; and an alkaline electrolyte in contact with both said positive electrode and said negative electrode.

2.    A recharageable cell according to Claim 1, in which said alkaline electrolyte consists essentially of an organic material and an alkaline hydroxide.

3.    A rechargeable cell according to Claim 2, in which said organic material is methanol and said alkaline hydroxide is potassium hydroxide.

4.    A rechargeable cell according to Claim 2 or 3, in which said separator comprises polyethylene, silica and mineral oil formed into a thin sheet.

5.    A rechargeable cell according to Claim 1, 2 or 3, in which said separator is formed of Daramic.

REACTANT UTILIZATION AS A FUNCTION OF THE
NUMBER OF RECHARGE CYCLES

1. $Zn-MnO_2$ CELL, 9M KOH – DARAMIC SEPARATOR
2. $Zn-MnO_2$ CELL, 50% MEOH IN 9M KOH – DARAMIC SEPARATOR
3. $Zn-MnO_2$ CELL, 9M KOH – NAFION SEPARATOR
4. $Zn-MnO_2$ CELL, 9M KOH – CELGARD SEPARATOR

% THEORETICAL 2 ELECTRON CAPACITY

CYCLE NUMBER

1 / 1

0136173